Europäisches Patentamt

European Patent Office

Office européen des brevets

(11) Numéro de publication: **0 430 763 A1**

# (12) DEMANDE DE BREVET EUROPEEN

(21) Numéro de dépôt: 90403276.0

(22) Date de dépôt: 21.11.90

(51) Int. Cl.⁵: **B65B 39/00, F16K 7/17**

(30) Priorité: 22.11.89 FR 8915358

(43) Date de publication de la demande:
05.06.91 Bulletin 91/23

(84) Etats contractants désignés:
**ES GB Bulletin 2**

(71) Demandeur: **ERCA HOLDING**
**Zone Industrielle de Courtaboeuf Avenue du Pacifique**
**F-91942 Les Ulis Cédex(FR)**

(72) Inventeur: **Torterotot, Roland**
**Le Plessis Mornay**
**F-78730 Longvilliers(FR)**

(74) Mandataire: **Hasenrader, Hubert et al**
**Cabinet BEAU DE LOMENIE 55, rue d'Amsterdam**
**F-75008 Paris(FR)**

(54) **Buse de distribution à membrane pour produits liquides ou pâteux et membrane utilisable dans un telle buse.**

(57) L'invention concerne une buse de distribution (1) à membrane (14) pour produits liquides ou pâteux du type comprenant dans un corps distributeur (2) raccordé à un doseur de produit liquide ou pâteux, un corps de buse (8) muni d'une pluralité de trous d'éjection (8b) répartis uniformément et débouchant dans l'évidement (3) du corps distributeur (2), et une membrane d'obturation (14) disposée au-dessus du corps de buse (8) et susceptible d'obturer les embouchures d'entrée supérieures des trous d'éjection (8b). Pour une pression de service maximale fournie dans la chambre de distribution (21), la membrane (14) repose en permanence sur la zone centrale (8f) de la face extrême supérieure (8a) du corps de buse (8), zone centrale (8f) entourée de l'ensemble des embouchures d'entrée des trous déjection (8b), et entre sa partie centrale (14) et son bord enserré (14a), la membrane (14) comporte une partie faiblement tronconique (14c) qui, en se déformant sous l'action de l'air comprimé dans la chambre de commande (22), est susceptible d'obturer lesdites embouchures d'entrée des trous d'éjection (8b).

fig.2

# BUSE DE DISTRIBUTION À MEMBRANE POUR PRODUITS LIQUIDES OU PÂTEUX ET MEMBRANE UTILISABLE DANS UNE TELLE BUSE.

La présente invention concerne une buse de distribution à membrane pour produits liquides ou pâteux du type comprenant dans un corps distributeur muni d'un évidement ouvert vers le haut et délimité par un fond présentant un passage ainsi que par une paroi latérale solidaire dudit fond et munie d'une ouverture latérale raccordée à un conduit de sortie d'un doseur de produit liquide ou pâteux, un corps de buse qui est muni d'une pluralité de trous d'éjection de section transversale identique d'une face extrême à l'autre, et répartis uniformément sur un cylindre fictif dont l'axe coïncide avec celui dudit corps de buse dont la partie supérieure pénètre, de façon étanche, par le fond, dans l'évidement du corps distributeur et y délimite avec la paroi latérale de ce dernier une chambre annulaire de distribution, une membrane d'obturation disposée au-dessus de la face extrême supérieure du corps de buse, susceptible d'obturer de façon étanche les embouchures d'entrée supérieures des trous d'éjection, et enserrée sur son bord entre l'extrémité supérieure du corps distributeur et une plaque de support dont la face inférieure délimite avec la face supérieure de la membrane une chambre de commande dans laquelle débouche, dans le prolongement de l'axe du corps de buse un conduit de commande pneumatique susceptible d'être raccordé alternativement à une source d'air comprimé ou à l'atmosphère.

Les buses de distribution de ce type connu présentent l'inconvénient de se trouver à plat et à une certaine distance uniforme des embouchures d'entrée des trous d'éjection pendant l'écoulement du produit à travers ceux-ci et la chambre annulaire de distribution, c'est-à-dire pendant que la chambre de commande pneumatique est mise à l'atmosphère. De ce fait, lors de l'obturation des embouchures d'entrée par la membrane, celle-ci doit d'abord se déformer d'une façon importante avant de pouvoir venir s'appliquer contre la partie centrale de la face extrême supérieure du corps de buse et avant de pouvoir obturer les embouchures d'entrée, en continuant sa déformation à partir de la partie centrale vers l'extérieur. Lors de l'ouverture des trous d'éjection, les inconvénients apparaissent en succession inverse. Il en résulte une usure relativement rapide des membranes et des fermetures et ouvertures relativement lentes et non uniformes des trous d'éjection. Par conséquent, il arrive fréquemment qu'au début et en fin de la phase d'éjection d'une dose de produit, des jets de produits soient projetés à grande vitesse dans les récipients à travers une partie seulement des trous d'éjection et causent la formation des mousses notamment du fait que certains trous d'éjection ont un débit plus important que d'autres. Par ailleurs les éclaboussures du produit s'accumulent rapidement autour des embouchures inférieures de sortie de trous d'éjection et entraînent fréquemment des arrêts des opérations de distribution pour permettre le nettoyage de la buse. De plus, l'obturation et le dégagement lents et non uniformes des embouchures d'entrée des trous d'éjection influent également d'une façon néfaste sur la précision des doses de produit distribuées d'une opération d'éjection à l'autre.

La présente invention a pour but de supprimer les inconvénients mentionnés ci-dessus et de proposer une buse de distribution du type précité qui permet une distribution et un dosage rapides, précis et uniformes du produit sans formation de mousse dans le récipient ou projections d'éclaboussures.

Conformément à l'invention, ce but est atteint du fait que, pour une pression de service maximale fournie dans la chambre de distribution, la membrane repose en permanence sur la zone centrale de la face extrême supérieure du corps de buse, zone centrale délimitée par un cercle qui est concentrique à l'axe dudit corps de buse et est proche et entouré de l'ensemble des embouchures d'entrée des trous d'éjection et qu'entre sa partie centrale et son bord enserré, ladite membrane comporte une partie faiblement tronconique pendant l'écoulement du produit à travers la buse de distribution et dont la base se situe du côté du bord enserré de la membrane à un niveau supérieur à celui de la partie centrale et en se déformant sous l'action de l'air comprimé dans la chambre de commande, est susceptible d'obturer lesdites embouchures d'entrée.

Grâce à cette conception, la répartition de chaque dose de produit s'effectue d'une façon très uniforme et le débattement de la membrane est limité à la partie de membrane servant à l'obturation des trous d'éjection. Il en résulte une augmentation de la durée de vie de la membrane qui se déforme moins sous l'effet de l'air comprimé au moment de l'obturation des embouchures d'entrée. La suppression de tout débattement de la partie centrale de la membrane conduit à une alimentation uniforme des trous de passage et à la suppression de la mousse dans les récipients, mousse provoquée par des débits de produit plus forts à travers certains trous par rapport à ceux passant à travers d'autres trous une même buse.

L'objet de la présente invention sera encore mieux compris à l'aide de la description suivante de plusieurs modes de réalisation de la buse de distribution conforme à l'invention, description faite en référence au dessin annexé sur lequel :

La figure 1 est une vue en élévation d'une coupe axiale à travers une buse de distribution de l'état de la technique;

La figure 2 est une vue en élévation d'une coupe axiale à travers un premier mode de réalisation de la buse de distribution selon l'invention;

La figure 3 est une vue en plan de la face inférieure de la plaque de support suivant la flèche F3 de la figure 2, vue montrant la zone située en face de la membrane;

La figure 4 est une vue en élévation d'une coupe verticale à travers la plaque de support selon la ligne brisée IV-IV de la figure 3;

La figure 5 est une vue en plan du corps distributeur et du corps de buse inserré dans ce dernier, la membrane et la plaque de support de la buse de distribution ayant été enlevées;

La figure 6 est une vue en élévation d'une coupe axiale à travers un deuxième mode de réalisation de la buse de distribution selon l'invention;

La figure 7 est une vue en plan de la membrane de la buse de distribution selon la figure 6 et

La figure 8 est une vue en plan d'une variante de membrane susceptible d'être utilisée dans le cadre du second mode de réalisation selon la figure 6.

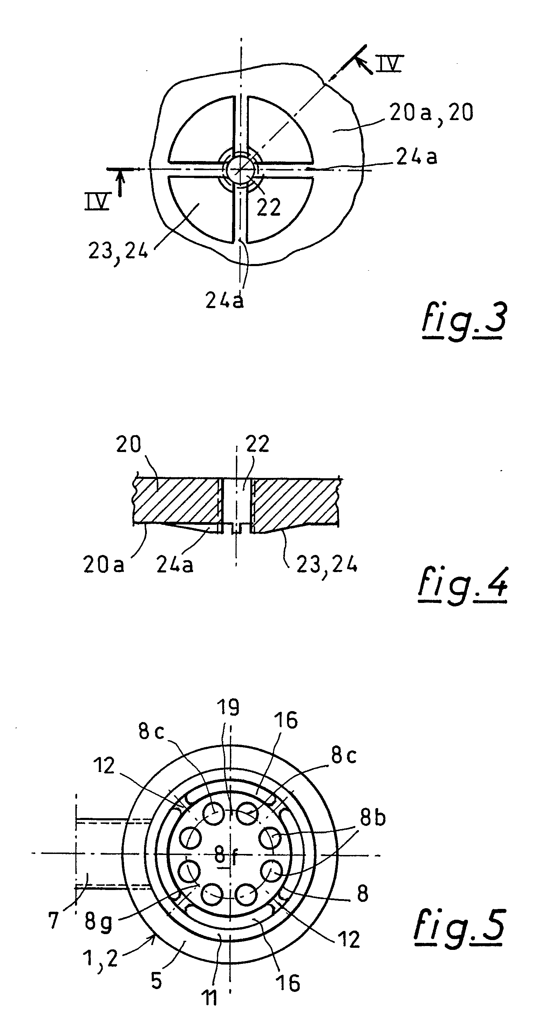

Telle que représentée sur le dessin annexé, la buse de distribution 1 comprend un corps de distributeur 2 muni d'un évidement 3, de préférence cylindrique, ouvert vers le haut et délimité par, d'une part, un fond 4 et, d'autre part, une paroi latérale 5 solidaire dudit fond 4. Dans la paroi latérale 5 est percée une ouverture 6 raccordée à un conduit de sortie 7 d'un doseur de produit liquide ou pâteux non représenté. La buse de distribution 1 comprend également un corps de buse 8 de section transversale homothétique et inférieure à celle de l'évidement 3. Ce corps de buse 8 qui peut présenter un pourtour cylindrique, pénètre de façon étanche, avec sa partie extrême supérieure, dans l'évidement 3 à travers une ouverture de fond appropriée 9 du corps distributeur 2. L'étanchéité entre le corps de buse 8 et le fond 4 est assurée de toute manière appropriée telle que par un joint annulaire 10. A son extrémité supérieure, le corps de buse 8 est, de préférence, muni d'une couronne de répartition 11 entourant à une certaine distance ladite extrémité du corps de buse 8 et fixée rigidement sur celle-ci à l'aide de plusieurs doigts d'écartement 12 (figure 5) uniformément répartis sur le pourtour dudit corps de buse 8. L'extrémité supérieure de la couronne de répartition 11 dépasse d'une faible hauteur de la face extrême supérieure 8a du corps de buse 8, cette face étant généralement plane et perpendiculaire à l'axe 13 du corps de buse 8 et de l'évidement 3. En position de service normale du corps de buse 8, l'extrémité supérieure de la couronne 11 dépasse aussi légèrement de la face supérieure du corps distributeur 2 et sert, par sa partie extérieure, de butée annulaire de retenue au bord annulaire d'une membrane d'obturation 14 qui sera décrite ci-après plus en détail. Un autre joint d'étanchéité 15 assure l'étanchéité entre le pourtour de la couronne 11 et la face intérieure de l'extrémité supérieure de la paroi latérale 5 du corps distributeur 2. Plusieurs passages d'alimentation en forme de tronçon annulaire 16 sont séparés les uns des autres par des doigts d'écartement 12 et délimités par la face latérale de la partie extrême supérieure du corps de buse 8 et la face interne de la couronne 11 et établissent une liaison permanente entre, d'une part, un espace 17 existant entre la face inférieure de la membrane 14 et la face supérieure 8a du corps de buse 8, et, d'autre part, une chambre annulaire de distribution 18 délimitée en dessous de la couronne 11, par, d'une part, le fond 4 et la paroi latérale 5 du corps distributeur 2 et, d'autre part, la partie supérieure du corps de buse 8, partie disposée à l'intérieur de l'évidement 3. Dans cette chambre de distribution 18 débouche le conduit de sortie 7 à travers lequel arrivent les quantités dosées du produit.

Comme on peut le voir également sur le dessin, le corps de buse 8 est muni d'une pluralité de trous d'éjection 8b qui sont uniformément répartis près de la périphérie dudit corps 8 de telle sorte que leurs axes 8c soient situés sur l'enveloppe d'un cylindre fictif droit 19 dont l'axe coïncide avec celui (13) du corps de buse 8. Les trous d'éjection 8b traversent le corps de buse 8 de part en part à partir de la face extrême supérieure plane 8a et se terminent du côté de la face extrême inférieure plane 8d par des tubulures d'éjection 8e dépassant légèrement de ladite face inférieure 8d.

Le bord annulaire de la membrane d'obturation 14 est conformé en une sorte de bourrelet annulaire 14a enserré entre, d'une part, une partie plane annulaire de la face inférieure d'une plaque de support 20 et, d'autre part, la face annulaire plane supérieure de la paroi latérale 5 du corps distributeur 2 ; l'extrémité supérieure de la couronne 11 est également appliquée contre la face inférieure de la membrane 14 juste à l'intérieur du bourrelet annulaire 14a de celle-ci et constitue pour ce dernier une butée de retenue.

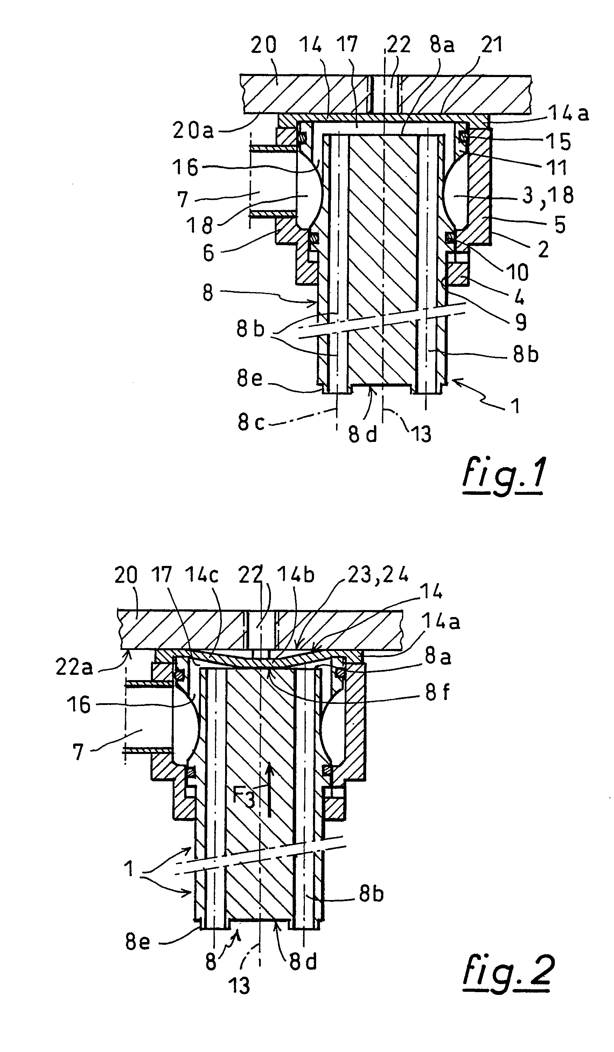

Comme on peut le voir sur les figures 1, 2 et 6, la partie plane 20a de la face inférieure de la plaque de support 20 est écartée (dans le sens axial du corps de buse 8) de la face extrême supérieure 8a du corps de buse 8, d'une distance au moins égale au double de l'épaisseur de la membrane 14, épaisseur mesurée sur la partie de membrane située à l'intérieur du bourrelet 14a. Entre la face supérieure de la membrane 14 et la partie de la plaque de support 20, partie couvrant ladite membrane 14 à l'intérieur de la couronne 11, et à défaut de celle-ci, à l'intérieur du bourrelet 14a, est prévue une chambre de commande 21 dans laquelle débouche, dans le prolongement de l'axe 13 du corps de buse 8, un conduit de commande pneumatique 22 susceptible d'être raccordé alternativement à une source d'air comprimé (non représentée) ou à l'atmosphère.

La membrane 14 et la plaque de support 20 telles que représentées sur la figure 1 sont de type connu. Elles possèdent respectivement des faces supérieure et inférieure entièrement planes. En l'absence d'une alimentation en air comprimé de la chambre de commande 21, la face supérieure plane de la membrane 14 est donc appliquée à plat contre la face inférieure entièrement plane de la plaque de support 20 sous l'action du produit s'écoulant sous une certaine pression à travers la buse de distribution 1, notamment à travers la chambre de distribution 18, l'espace 17, les embouchures d'entrée des trous d'éjection 8b, lesdits trous 8b et les embouchures de sortie de ces derniers.

Cette disposition connue présente plusieurs inconvénients qui ont déjà été mentionnés préalablement.

Selon l'invention (figures 2 à 8), il est proposé de maintenir la partie centrale 14b de la membrane 14 en permanence appliquée contre la zone centrale 8f de la face supérieure 8a du corps de buse 8, même pendant les périodes d'écoulement du produit à travers la buse de distribution, avec une pression maximale de service, c'est-à-dire pendant les périodes pendant lesquelles la chambre de commande 21 est sans pression, puisque reliée à l'atmosphère. Cette zone centrale 8f contre laquelle est appliquée en permanence, pendant le service normal de la buse de distribution 1, la partie centrale 14b de la membrane 14, se situe à l'intérieur des embouchures d'entrée, c'est-à-dire des extrémités supérieures des trous d'éjection 8b, notamment à l'intérieur d'un cercle qui est concentrique à l'axe 13 du corps de buse 13 et est proche et entouré de l'ensemble des embouchures d'entrée des trous d'éjection 8b. En outre, entre sa partie centrale plane 14b reposant en permanence sur la zone centrale 8f de la face supérieure plane 8a du corps de buse 8, et son bord annulaire en forme de bourrelet 14a, la membrane 14 comporte, notamment au-dessus des embouchures d'entrée des trous d'éjection 8b, une partie 14c faiblement tronconique pendant l'écoulement du produit à travers la buse de distribution 1. Cette partie 14c faiblement tronconique à l'état non sollicité en absence de l'air comprimé dans la chambre de commande 21, a la forme d'un tronc de cône inversé dont la base se situe, du côté du bord enserré 14a de la membrane 14, à un niveau supérieur à celui de la partie centrale 14b raccordée au "sommet" dudit tronc de cône 14c dont la pente est seulement de l'ordre de quelques degrés par rapport à un plan horizontal. Dans la membrane selon l'invention, c'est seulement cette partie tronconique 14c de la membrane 14 qui va se déformer sous l'action de la pression d'air établie périodiquement dans la chambre de commande 21, et venir obturer rapidement et de façon uniforme les embouchures d'entrée des trous d'éjection 8b. La membrane 14, qui à l'exception de son bourrelet 14a présente une épaisseur de paroi sensiblement uniforme et qui est destinée à être utilisée dans le cadre de la présente invention possède, avant sa mise en place dans la buse de distribution, de préférence, une structure ou forme telle que sa face inférieure présente une partie centrale plane à laquelle se raccorde une partie légèrement tronconique inversée dont la base joint le bourrelet supérieur 14a de la membrane 14.

Du fait que, selon l'état de la technique, la face inférieure de la plaque de support 20 est entièrement plane, une membrane "tronconique" conforme à l'invention serait écrasée contre ladite plaque 20 sous l'action de la pression du produit (et en absence de l'air comprimé dans la chambre de commande 21) et ne pourrait pas remplir correctement sa fonction. C'est pourquoi on associe à la face supérieure de la membrane 14, c'est-à-dire la face supérieure délimitant la chambre de commande 21, des moyens d'appui 23 qui imposent à ladite membrane 14, au plus tard au moment de son montage dans la buse de distribution 1 de prendre une configuration tronconique et l'appliquent avec sa partie centrale 14b, de façon étanche tout au moins aux pressions d'écoulement du produit, sur la zone centrale 8f de l'extrémité supérieure du corps de buse 8.

Selon le mode de réalisation représenté sur les figures 2 à 4, ces moyens d'appui 23 sont constitués par une protubérance d'appui tronconique 24 dépassant de la face plane inférieure 20a de la plaque de support 20 et surplombant l'extrémité supérieure 8a du corps de buse 8, la hauteur de cette protubérance tronconique 24 étant telle que son sommet central 24a applique fermement la partie centrale 14b de la membrane 14 contre la zone centrale 8f du corps de buse 8.

Dans ce cas, la chambre de commande 21 est délimitée essentiellement par la face supérieure de la membrane 14 et la protubérance tronconique 24, le conduit de commande pneumatique 22 débouchant dans cette chambre 21 au sommet central de ladite protubérance tronconique 24.

Pour faciliter l'application rapide de l'air comprimé sur la membrane 14 et son évacuation hors de la chambre de commande 21, il est avantageux de ménager plusieurs canaux radiaux de répartition 24a dans l'épaisseur de la protubérance d'appui 24, ces canaux 24a s'étendant radialement par exemple en forme de croix ou d'étoile à partir du conduit de commande 22 vers la partie périphérique de ladite protubérance 24.

Il est à noter que si la plaque de support 20 au lieu de présenter une face inférieure 20a entièrement plane, comporte une protubérance d'appui 24 telle qu'elle vient d'être décrite, on peut envisager d'utiliser une membrane 14 dont la paroi est plane à l'état démonté mais qui, lors de son montage dans la buse de distribution 1, subit une légère précontrainte par la protubérance d'appui 24.

Au lieu d'être fixés sur la plaque de support 20, par exemple sous forme d'une protubérance tronconique 24, les moyens d'appui 23 peuvent également être incorporés à la membrane d'obturation 14.

Dans ce cas, la membrane 14 présente à l'état normal une forme tronconique dont le sommet constitue la partie centrale plane 14b appliquée en permanence contre la zone centrale 8f du corps de buse et dont la partie tronconique 14c relie la partie centrale 14b au bourrelet annulaire 14a qui se trouve à un niveau supérieur à celui occupé par la partie centrale 14b et, qui par sa face supérieure, détermine un plan horizontal parallèle à celui de la partie centrale 14b de la membrane 14. En plus, la face supérieure de la membrane 14 comporte tout au moins dans sa partie tronconique 14c et, le cas échéant, aussi dans la partie centrale 14b, des protubérances d'appui 25 ou 26 qui s'étendent verticalement à partir de cette face supérieure vers le haut jusqu'au plan horizontal défini par la face supérieure du bourrelet annulaire 14a de la membrane 14. On peut alors utiliser une plaque de support connue 20 qui habituellement présente une face inférieure 20a entièrement plane au moins dans la zone surplombant le corps distributeur 2 et le corps de buse 8.

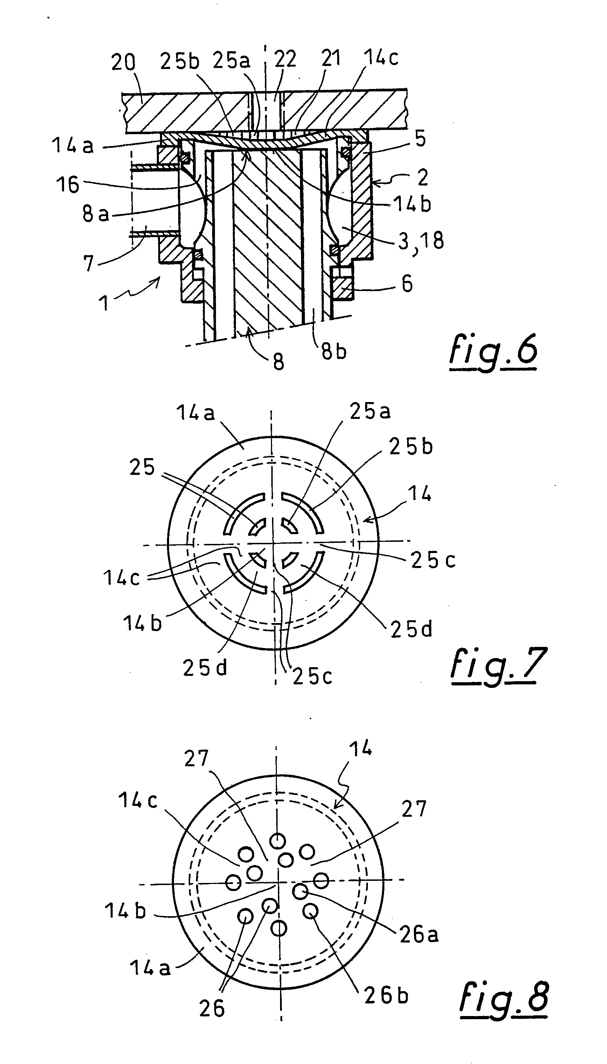

Les protubérances verticales d'appui 25 telles que représentées sur les figures 6 et 7 sont avantageusement constituées par plusieurs tronçons de nervures annulaires 24a, 25b disposés concentriquement autour du centre de la membrane 14 et séparés les uns des autres par des échancrures ou gorges de circulation d'air 24c, 24d, les échancrures 25c s'étendant radialement et les gorges suivant au moins un cercle dont le centre se confond avec celui de la membrane 14.

Avantageusement, ces tronçons de nervures annulaires 25a, 25b, sont disposés en au moins deux cercles concentriques, ceux (25a) formant le cercle intérieur étant prévus au voisinage immédiat de l'embouchure du conduit de commande 22 dans la chambre de commande 21 tandis que les autres tronçons (25b) formant le cercle extérieur sont situés à l'aplomb des trous d'éjection 8b du corps de buse 8 (voir figures 6 et 7).

Selon une variante représentée sur la figure 8, les protubérances d'appui 26 présentent la forme de bossages 26a, 26b faisant saillie de la face supérieure de la membrane tronconique 14 jusqu'au plan horizontal défini par la face supérieure du bourrelet annulaire 14a de ladite membrane 14.

Comme représenté sur le dessin, une première série de bossages 26a, dits bossages intérieurs, est disposée de façon à s'appuyer par leurs extrémités supérieures contre la face plane inférieure 20a de la plaque de support 20 au voisinage immédiat de l'embouchure du conduit de commande 22 dans la chambre de commande 21 et une deuxième série de bossages 26b est disposée à l'aplomb de la zone annulaire définie par les embouchures d'entrée des trous d'éjection 8b. Dans ce cas, les bossages 26b de la deuxième série, dits bossages extérieurs, sont de préférence prévus sur la membrane 14 à l'aplomb de la zone 8g de l'extrémité supérieure 8a du corps de buse.8, zone 8g comprise entre deux trous d'éjection 8b (voir figures 5 et 8).

Il peut également être avantageux de prévoir un bossage intérieur 26a seulement dans chaque deuxième secteur de membrane délimité par deux bossages extérieurs voisins 26b et le centre de la membrane 14, et, de créer ainsi plusieurs canaux radiaux d'écoulement préférentiels 27 sur la face supérieure de la membrane 14 et donc dans la chambre de commande 21.

Il est à noter que les membranes tronconiques 14 à moyens d'appui incorporés 23, 25, 26 telles que représentées sur les figures 6 à 8 ont, par rapport aux membranes d'épaisseur constante 14 et coopérant avec des moyens d'appui 23, 24 ayant la forme d'une protubérance tronconique 24 incorporée à la face inférieure 20a de la plaque d'appui 20, l'avantage de pouvoir être soulevées légèrement lors du nettoyage de la buse 1 à l'aide d'un liquide de nettoyage à forte pression et à fort débit.

Les protubérances d'appui 24a, 25b, 26a, 26b incorporées à la membrane tronconique 14 peuvent être moulées en la même matière que la membrane proprement dite ou en une matière moulable différente de celle de la membrane mais compatible avec celle de la paroi de la membrane, et possédant une dureté supérieure à celle de ladite paroi.

La présente invention vise non seulement la nouvelle structure d'une buse de distribution, mais également et ceci à titre indépendant, les membranes tronconiques présentant sur leur face supérieure des protubérances d'appui.

En outre, les modes de réalisation prédédemment décrits peuvent subir un certain nombre de modifications sans que l'on sorte pour cela du cadre de protection défini par les revendications annexées.

## Revendications

1. Buse de distribution (1) à membrane (14) pour produits liquides ou pâteux du type comprenant dans un corps distributeur (2) muni d'un évidement (3) ouvert vers le haut et délimité par un fond (4) présentant un passage (9) ainsi que par une paroi latérale (5) solidaire dudit fond (4) et munie d'une ouverture latérale (6) raccordée à un conduit de sortie (7) d'un doseur de produit liquide ou pâteux, un corps de buse (8) qui est muni d'une pluralité de trous d'éjection (8b) de section transversale identique d'une face extrême à l'autre, et répartis uniformément sur un cylindre fictif (19) dont l'axe coïncide avec celui (13) dudit corps de buse (8) dont la partie supérieure pénètre, de façon étanche, par le fond (4), dans l'évidement (3) du corps distributeur (2) et y délimite avec la paroi latérale de ce dernier une chambre annulaire de distribution (18), une membrane d'obturation (14) disposée au-dessus de la face extrême supérieure (8a) du corps de buse (8), susceptible d'obturer de façon étanche les embouchures d'entrée supérieures des trous d'éjection (8b), et enserrée sur son bord (14a) entre l'extrémité supérieure du corps distributeur (2) et une plaque de support (20) dont la face inférieure délimite avec la face supérieure de la membrane (14) une chambre de commande (21) dans laquelle débouche, dans le prolongement de l'axe (13) du corps de buse (8) un conduit de commande pneumatique (22) susceptible d'être raccordé alternativement à une source d'air comprimé ou à l'atmosphère, caractérisée en ce que, pour une pression de service maximale fournie dans la chambre de distribution (21), la membrane (14) repose en permanence sur la zone centrale (8f) de la face extrême supérieure (8a) du corps de buse (8), zone centrale (8f) délimitée par un cercle qui est concentrique à l'axe (13) dudit corps de buse (8) et est proche et entouré de l'ensemble des embouchures d'entrée des trous d'éjection (8b) et qu'entre sa partie centrale (14) et son bord enserré (14a), ladite membrane (14) comporte une partie faiblement tronconique (14c) pendant l'écoulement du produit à travers la buse de distribution (8) et dont la base se situe du côté du bord enserré (14a) de la membrane (14) à un niveau supérieur à celui de la partie centrale (14b) et, en se déformant sous l'action de l'air comprimé dans la chambre de commande, est susceptible d'obturer lesdites embouchures d'entrée des trous de d'éjection (8b).

2. Buse selon la revendication 1, caractérisée en ce qu'à la face supérieure de la membrane (14) sont associés des moyens d'appui (23) qui imposent à ladite membrane (14), au plus tard au moment de son montage dans la buse de distribution (1), une configuration tronconique et l'appliquent avec sa partie centrale (14b), de façon étanche tout au moins aux pressions d'écoulement du produit, sur la zone centrale (8f) de l'extrémité supérieure (8a) du corps de buse (8).

3. Buse selon l'une des revendications 1 et 2, caractérisée en ce que les moyens d'appui (23) sont constitués par une protubérance d'appui tronconique (24) dépassant de la face plane inférieure (20a) de la plaque de support (20) et surplombant l'extrémité supérieure (8a) du corps de buse (8), la hauteur de cette protubérance tronconique (24) étant telle que son sommet central (24a) applique fermement la partie centrale (14b) de la membrane (14) contre la zone centrale (8f) du corps de buse (8).

4. Buse selon la revendication 3, caractérisée en ce que la chambre de commande (21) est délimitée essentiellement par la face supérieure de la membrane (14) et la protubérance tronconique (24), le conduit de commande pneumatique (22) débouchant dans cette chambre (21) au sommet central de ladite protubérance tronconique (24).

5. Buse selon l'une des revendications 3 et 4, caractérisée en ce que plusieurs canaux radiaux de répartition (24) sont ménagés dans l'épaisseurs de la protubérance d'appui (24), ces canaux (24a) s'étendant radialement par exemple en forme de croix ou d'étoile à partir du conduit de commande (22) vers la partie périphérique de ladite protubérance (24).

6. Buse selon l'une des revendications 1 à 5, caractérisée en ce qu'elle comprend une membrane (14) dont la paroi est plane à l'état démonté mais qui, lors de son montage dans la buse de distribution (1), subit une légère précontrainte par la protubérance d'appui (24).

7. Buse selon l'une des revendications 1 et 2, caractérisée en ce que les moyens d'appui (23) peuvent également être incorporés à la membrane d'obturation (14).

8. Buse selon l'une des revendications 1, 2 et 7, caractérisée en ce que la membrane (14) présente à l'état normal une forme tronconique dont le sommet constitue la partie centrale plane (14b) appliquée en permanence contre la zone centrale (8f) du corps de buse (8) et dont la partie tronconique (14c) relie la partie centrale (14b) au bourrelet annulaire (14a) qui se trouve à un niveau supérieur à celui occupé par la partie centrale (14b) et, qui,

par sa face supérieure, détermine un plan horizontal parallèle à celui de la partie centrale (14b) de la membrane (14), et qu'en plus, la face supérieure de la membrane (14) comporte tout au moins dans sa partie tronconique (14c) et, le cas échéant, aussi dans la partie centrale (4b), des protubérances d'appui (25 ou 26) qui s'étendent verticalement à partir de cette face supérieure vers le haut jusqu'au plan horizontal défini par la face supérieure du bourrelet annulaire (14a) de la membrane (14).

9. Buse selon la revendication 8, caractérisée en ce que les protubérances d'appui (25) sont constituées par plusieurs tronçons de nervures annulaires (24a, 25b) disposés concentriquement autour du centre de la membrane (14) et séparés les uns des autres par des échancrures ou gorges de circulation d'air (24c, 24d), les échancrures (25c) s'étendant radialement et les gorges suivant au moins un cercle dont le centre se confond avec celui de la membrane (14).

10. Buse selon la revendication 9, caractérisée en ce que ces tronçons de nervures annulaires (25a, 25b), sont disposés en au moins deux cercles concentriques, ceux (25a) formant le cercle intérieur étant prévus au voisinage immédiat de l'embouchure du conduit de commande (22) dans la chambre de commande (21) tandis que les autres tronçons (25b) formant le cercle extérieur sont situés à l'aplomb des trous d'éjection (8b) du corps de buse (8).

11. Buse selon la revendication 8, caractérisée en ce que les protubérances d'appui (26) présentent la forme de bossages (26a, 26b) faisant saillie de la face supérieure de la membrane tronconique (14) jusqu'au plan horizontal défini par la face supérieure du bourrelet annulaire (14a) de ladite membrane (14).

12. Buse selon la revendication 11, caractérisée en ce qu'une première série de bossages (26a), dits bossages intérieurs, est disposée de façon à s'appuyer par leurs extrémités supérieures contre la face plane inférieure (20a) de la plaque de support (20) au voisinage immédiat de l'embouchure du conduit de commande (22) dans la chambre de commande (21) et une deuxième série de bossages (26b) est disposée à l'aplomb de la zone annulaire définie par les embouchures d'entrée des trous d'éjection (8b).

13. Buse selon la revendication 12, caractérisée en ce que les bossages (26b) de la deuxième série, dits bossages extérieurs, sont prévus sur la membrane (14) à l'aplomb de la zone (8g) de l'extrémité supérieure (8a) du corps de buse (8), zone (8g) comprise entre deux trous d'éjection (8b).

14. Buse selon l'une des revendications 12 et 13, caractérisée en ce qu'un bossage intérieur (26a) est prévu seulement dans chaque deuxième secteur de membrane délimité par deux bossages extérieurs voisins (26b) et le centre de la membrane (14).

15. Buse selon l'une des revendications 1, 2, et 7 à 14, caractérisée en ce que les protubérances d'appui (24a, 25b, 26a, 26b) incorporées à la membrane tronconique (14) sont moulées en la même matière que la membrane proprement dite.

16. Buse selon l'une des revendications 1, 2 et 7 à 14, caractérisée en ce que les protubérances (24a, 25b, 26a, 26b) de la membrane tronconique (14) sont moulées en une matière moulable différente de celle de la membrane mais compatible avec celle de la paroi de la membrane, et possédant une dureté supérieure à celle de ladite paroi.

17. Membrane d'obturation (14) destinée à séparer dans une buse de distribution (1) une chambre supérieure de commande à air comprimé (21), d'une chambre inférieure de distribution (17, 18) et d'obturer sous l'action de l'air comprimé, des trous d'éjection (8b) prévus dans un corps de buse (8) logés partiellement dans ladite chambre de distribution (17, 18) en dessous de ladite membrane (14), qui comporte à sa périphérie un bourrelet annulaire (14a),

caractérisée en ce qu'elle présente, à l'état normal, une forme en tronc de cône, dont le sommet, d'une part, est constitué par une partie centrale plane (14b) parallèle à la face supérieure plane du bourrelet annulaire (14a) qui se trouve à un niveau supérieur à celui occupé par ladite partie centrale (14b), et, d'autre part, est raccordé au bourrelet annulaire (14a) par une partie tronconique intermédiaire (14c) et que la face supérieure de la membrane (14) comporte tout au moins dans sa partie tronconique (14c) des protubérances verticales d'appui (25, 26) qui s'étendent verticalement, à partir de cette face supérieure de la membrane (14) jusqu'au plan horizontal défini par la faces supérieure du bourrelet (14a).

18. Membrane selon la revendication 17, caractérisée en ce que les protubérances verticales d'appui (25) sont constituées par plusieurs tronçons de nervures annulaires (24a, 25b) disposés concentriquement autour du centre de la membrane (14) et séparés les uns des autres par des échancrures ou gorges de circulation d'air (24c, 24d), les échancrures (25c) s'étendant radialement et les gorges suivant au moins un cercle dont le centre se confond avec celui de la membrane (14).

19. Membrane selon la revendication 18, caractérisée en ce que les tronçons de nervures annulaires (25a, 25b), sont disposés en au moins deux cercles concentriques, ceux (25a) formant le cercle intérieur étant prévus au voisinage immédiat de l'embouchure du conduit de commande (22) dans la chambre de commande (21) tandis que les autres tronçons (25b) formant le cercle extérieur sont situés à l'aplomb des trous d'éjection (8b) de la buse de distribution (1).

20. Membrane selon la revendication 17, caractérisée en ce que les protubérances d'appui (26) présentent la forme de bossages (26a, 26b) faisant saillie de la face supérieure de la membrane tronconique (14) jusqu'au plan horizontal défini par la face supérieure du bourrelet annulaire (41a) de ladite membrane (14).

21. Membrane selon l'une des revendications 17 à 20, caractérisée en ce que les protubérances d'appui (24a, 25b, 26a, 26b) incorporées à la membrane tronconique (14) sont moulées en la même matière que la membrane proprement dite.

22. Membrane selon l'une des revendications 17 à 20, caractérisée en ce que les protubérances (24a, 25b, 26a, 26b) de la membrane tronconique (14) sont moulées en une matière moulable différente de celle de la membrane mais compatible avec celle de la paroi de la membrane, et possédant une dureté supérieure à celle de ladite paroi.

_fig.1_

_fig.2_

9

_fig.3_

_fig.4_

_fig.5_

_fig.6_

_fig.7_

_fig.8_

# RAPPORT DE RECHERCHE
# EUROPEENNE

Numéro de la demande

**EP 90 40 3276**

## DOCUMENTS CONSIDERES COMME PERTINENTS.

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 413 152  (OLLIER)<br>* page 2, colonne de droite, lignes 10 - 18 * * lignes 33 - 39; figure 3 *<br>- - - - - | 1,17 | B 65 B<br>39/00<br>F 16 K 7/17 |

| | DOMAINES TECHNIQUES RECHERCHES (Int. Cl.5) |
|---|---|
| | B 65 B<br>F 16 K<br>B 05 B |

Le présent rapport de recherche a été établi pour toutes les revendications

| Lieu de la recherche | Date d'achèvement de la recherche | Examinateur |
|---|---|---|
| La Haye | 25 février 91 | JUGUET J.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
 
& : membre de la même famille, document
    correspondant